# EUROPÄISCHE PATENTSCHRIFT

(11) **EP 0 634 721 B1**
(45) Veröffentlichungstag und Bekanntmachung des Hinweises auf die Patenterteilung: **23.09.1998**
(21) Anmeldenummer: 93111480.5
(22) Anmeldetag: 16.07.1993
(51) Int. Cl.: G06F 12/10

(54) **Verfahren und Schaltungsanordnung zur Übersetzung von virtuellen Adressen in Datenverarbeitungsanlagen**
Method and circuit for translation of virtual addresses in data processing systems
Procédé et circuit pour la traduction d'adresses virtuelles dans un système de traitement de données

(43) Veröffentlichungstag der Anmeldung: 18.01.1995
(73) Patentinhaber: Siemens Nixdorf Informationssysteme Aktiengesellschaft, 33102 Paderborn (DE)
(72) Erfinder: Salzmann, Horst, Dipl.-Phys., D-81525 München (DE)
(74) Vertreter: Epping, Wilhelm, Dr.-Ing.

(56) Entgegenhaltungen:
- EP-A- 0 175 091
- EP-A- 0 410 740
- DE-A- 3 633 227
- COMPUTERWOCHE Bd. 16, Nr. 36 , 1. September 1989 , MUNCHEN; DE Seiten 30 - 36 GROPP 'Bei der ESA-Architektur gibt die Performance den Ton an'

## Beschreibung

Die Erfindung betrifft ein Verfahren und eine Schaltungsanordnung zur Übersetzung von virtuellen Adressen in absolute Adressen in Datenverarbeitungsanlagen gemäß dem Oberbegriff von Patentanspruch 1 bzw. Patentanspruch 10.

Große Datenverarbeitungsanlagen arbeiten überwiegend mit einem virtuellen Speicherkonzept, wobei die verfügbare Speichergröße in den vergangenen Jahren fortlaufend vergrößert wurde. Die bisher letzte Entwicklungsstufe wurde mit der sogenannten ESA-Architektur erreicht, derzufolge statt der bisher nur zwei gleichzeitig ansprechbaren Adreßräume nun eine Vielzahl von virtuellen Adreßräumen mit jeweils zwei GBytes gleichzeitig angesprochen werden können. Erreicht wird dies durch eine der bisherigen dynamischen Adreßumsetzung DAT vorgeschaltete weitere Adreßumsetzungsstufe ART - man siehe IBM Enterprise Systems Architecture 370 - Principles of Operation, Druckschrift SA 22 - 7200 - 0, August 1988 und Computerwoche, 01.09.1989, Seiten 30 bis 36.

Die Erfindung bezweckt nun eine vorteilhafte Realisierung der ESA-Architektur bei Rechnern mit mehr als einem Prozessor, wobei alle Prozessoren auf dasselbe Speichersystem zugreifen können und beispielsweise in Form eines Befehlsaufbereitungs- und eines anschließenden Befehlsausführungsprozessors nach dem Fließbandprinzip zusammenarbeiten oder aber als eigenständige Prozessoren zugeordnete Gruppen von Befehlen ausführen.

Das der neuartigen Realisierung zugrundeliegende Verfahren gemäß der Erfindung ergibt sich aus den kennzeichnenden Merkmalen des Patentanspruches 1. Danach bleibt, wie z.B. bei nach dem Fließbandprinzip arbeitenden Rechnern allgemein üblich, die Möglichkeit der vollständigen Adreßübersetzung auf einen Prozessor beschränkt, während die anderen Prozessoren lediglich mit assoziativ arbeitenden Übersetzungspuffern arbeiten, um bereits übersetzte Seitenadressen zwischenzuspeichern, so daß auf diese dann ohne erneute Inanspruchnahme der Adreßumsetzungseinheit des anderen Prozessors zurückgegriffen werden kann.

Um nun dabei die vorgeschaltete Register-Adreßumsetzung ART zu berücksichtigen, wird einer begrenzten Anzahl der durch die Zugriffsregister definierbaren Adreßräume eine gesonderte Adreßraumnummer zugeordnet, die anstelle der Zeiger aus den Zugriffsregistern die zweistufige Zuordnung in den übrigen Prozessoren sichern. Zu diesem Zweck werden einerseits den Mehrzweckregistern dieser Prozessoren den Zugriffsregistern vergleichbare gesonderte Register zur Aufnahme der jeweils gesonderten Adreßraumnummer individuell zugeordnet, die in gleicher Weise durch das Registerfeld eines Befehls ansprechbar sind. Andererseits wird die gesonderte Adreßraumnummer als weiterer Kontrolleintrag neben der virtuellen Seitenadresse im Übersetzungspuffer verwendet, so daß jede darin enthaltene übersetzte absolute Seitenadresse nunmehr durch den kombinierten Kontrolleintrag aus gesonderter Adreßraumnummer und virtueller Seitenadresse bestimmt wird. Dem neuen Kontrolleintrag entsprechend erfolgt die Überprüfung des Übersetzungspuffers auf Vorliegen einer übersetzten absoluten Seitenadresse anhand der im ausgewählten gesonderten Register enthaltenen Adreßraumnummer in Verbindung mit der in der jeweils berechneten virtuellen Adresse enthaltenen virtuellen Seitenadresse.

Die Erfindung verwendet damit für die Sicherstellung der Zuordnung im Rahmen der Register-Adreßumsetzung in den anderen Prozessoren einen stark verkürzten Zeiger, was erheblich weniger Speicheraufwand erfordert, wenn man den Umfang der benutzten gesonderten Adreßraumnummern gering hält. Für die jeweils getroffene Zuordnung zwischen einer der gesonderten Adreßraumnummern und einem der möglichen virtuellen Adreßräume ist zwar ein gesonderter Speicher erforderlich. Dieser Speicher fällt aber aufwandsmäßig nicht ins Gewicht, wenn gemäß einer Weiterbildung entsprechend Patentanspruch 5 auch im die vollständige Adreßübersetzung ausführenden Prozessor ein assoziativ arbeitender Übersetzungspuffer zur Zwischenspeicherung der für die dynamische Adreßumsetzung erforderlichen Zeiger verwendet wird und jedem der Einträge eine der gesonderten Adreßraumnummern zugeordnet wird.

Andere Weiterbildungen des Verfahrens ergeben sich aus den Patentansprüchen 2 bis 4 und 6 bis 9. Diese beziehen sich einerseits auf die Durchführung der Adreßübersetzung und andererseits auf Maßnahmen zur Realisierung verschiedener Übersetzungsmodi im Rahmen der ESA-Architektur.

Der Aufwand für die Durchführung des neuen Verfahrens ist verhältnismäßig gering. Die dazu benötigte Schaltungsanordnung ergibt sich aus den Merkmalen des Patentanspruches 10. Sie erfordert in allen Prozessoren mit verkürzter Übersetzungsmöglichkeit einen parallel zum Mehrzweckregistersatz ansteuerbaren zusätzlichen Registersatz für die Aufnahme jeweils einer der gesonderten Adreßraumnummern und einen um diese erweiterten Kontrolleintrag im Übersetzungspuffer mit entsprechend erweiterter Überwachungsschaltung. Hinzu kommt ein Speicher für die einzelnen Adreßraumnummern mit den jeweils diesen zugeordneten virtuellen Adreßräumen im für die Adreßübersetzung zuständigen Prozessor. Weiterbildungen dazu enthalten die weiteren Patentansprüche 11 bis 13.

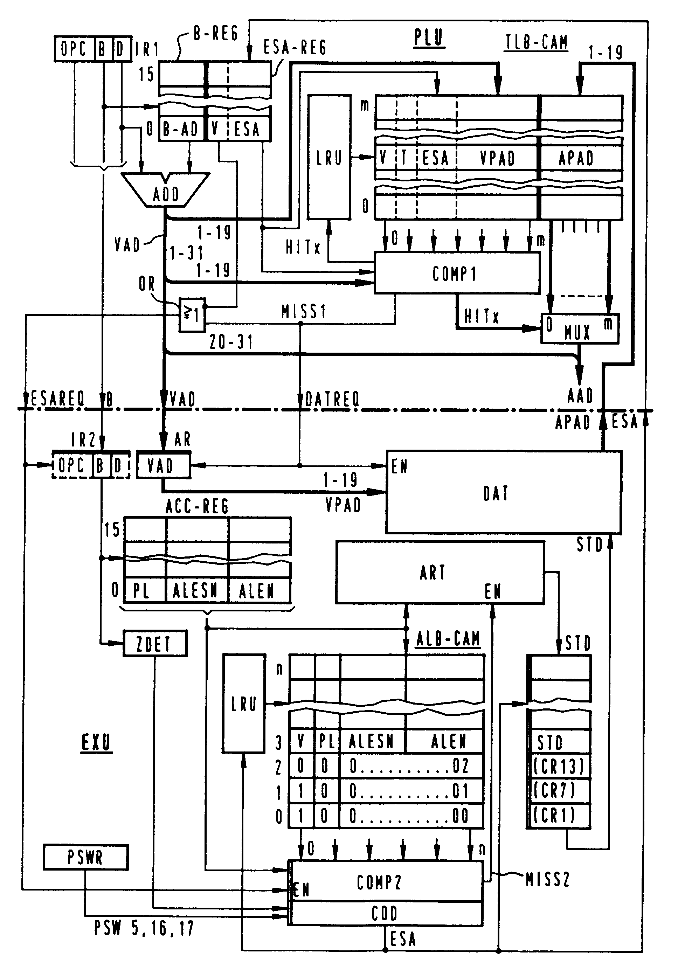

Einzelheiten der Erfindung seien nachfolgend anhand eines in der Zeichnung dargestellten Ausführungsbeispieles näher erläutert. Die einzige Figur zeigt in Form eines Blockschaltbildes Teile zweier Prozessoren PLU und EXU. Die Darstellung ist dabei auf die für das Verständnis der Erfindung maßgebenden Teile beschränkt, wobei die vollständige Übersetzung von virtuellen Adressen VAD vom Prozessor EXU im unteren Teil der Figur ausgeführt wird.

Entsprechend der ESA-Architektur weist dieser Prozessor EXU einen aus sechzehn Zugriffsregistern ACC-REG bestehenden Registersatz auf. Diese Zugriffsregister sind einzeln durch das Registerfeld B eines Befehls ansprechbar und werden programmabhängig mit dem Zeiger ALESN/ALEN für den jeweils zuständigen virtuellen Adreßraum geladen. Ausgehend von diesen Zeigern kann dann in den Zugriffslisten der Register-Adreßumsetzung ART der den jeweils zugehörigen Zeiger STD für die dynamische Adreßumsetzung DAT beinhaltende Eintrag aufgesucht werden, so daß diese schließlich abhängig von der in der jeweils berechneten virtuellen Adresse VAD enthaltenen virtuellen Seitenadresse VPAD die zugehörige absolute Seitenadresse APAD ermitteln kann.

Damit nicht in kurzen Abständen eine Register-Adreßumsetzung ART für denselben Adreßraum durchgeführt werden muß, ist zusätzlich ein Übersetzungspuffer ALB-CAM für n Einträge vorgesehen. Dieser Übersetzungspuffer arbeitet in bekannter Weise assoziativ, indem alle enthaltenen Kontrolleinträge anhand eines vorgegebenen Vergleichsdatums überprüft werden und im Falle eines Treffers der dem den Treffer auslösenden Kontrolleintrag zugeordnete Nutzeintrag für die weitere Verarbeitung freigegeben wird, wenn der Eintrag insgesamt gültig ist.

Im vorliegenden Fall bestehen die Kontrolleinträge aus den Einträgen in den Zugriffsregistern ACC-REG entsprechenden Zeigern ALESN/ALEN und die Nutzeinträge aus den bereits ermittelten zugehörigen Zeigern STD für die dynamische Adreßumsetzung DAT. Im Rahmen einer Adreßübersetzung wird also ausgehend vom Registerfeld B eines Befehls das zugehörige Zugriffsregister ACC-REG aufgesucht und der darin enthaltene Zeiger als Vergleichsdatum für die Überprüfung des Übersetzungspuffers ALB-CAM freigegeben. Anhand dieses Vergleichsdatums überprüft eine Überwachungsschaltung COMP2 alle Kontrolleinträge des Übersetzungspuffers auf Übereinstimmung. Wird ein Treffer ermittelt, wird der zugehörige Nutzeintrag in Form des Zeigers STD freigegeben. Im vorliegenden Fall erfolgt die Auswahl des zugehörigen Nutzeintrages gesondert abhängig von einer der Überwachungsschaltung COMP2 nachgeschalteten Kodierschaltung COD, die die individuellen Treffersignale der einzelnen Einträge 0 bis n in eine entsprechende binär kodierte Zahl ESA umwandelt, mit der dann der die Nutzeinträge enthaltende Speicherteil adressiert wird. Diese binär kodierte Zahl ESA stellt nun zugleich die gesonderte Adreßraumnummer dar, die gemäß der Erfindung einer vorgegebenen Anzahl - nämlich n entsprechend der Zahl der Einträge im Übersetzungspuffer - von virtuellen Adreßräumen zugeordnet werden kann.

Wird bei der Überprüfung des Übersetzungspuffers ALB-CAM dagegen kein Treffer ermittelt, so wird mit dem Signal MISS2 die Register-Adreßumsetzung ART angesteuert und der Zeiger STD für die dynamische Adreßumsetzung DAT von dieser ermittelt und ein entsprechender Eintrag angelegt.

Im Rahmen der ESA-Architektur sind vier verschiedene Übersetzungsmodi vorgesehen, denen unterschiedliche Adreßräume entsprechen. Drei der Modi arbeiten mit fest zugeordneten Adreßräumen, nämlich dem Primary Space, dem Secondary Space und dem Home Space, für die die Zeiger STD für die dynamische Adreßumsetzung DAT durch Kontrollregister vorgegeben sind so daß eine Ermittlung der Zeiger über die Register-Adreßumsetzung ART hierfür entfällt. Lediglich im vierten Übersetzungsmodus, nämlich dem Registermodus, kommt die Register-Adreßumsetzung voll zum Tragen und werden die übrigen Adreßräume ansprechbar. Welcher von den vier Übersetzungsmodi jeweils gilt, wird durch Steuerbits 5, 16 und 17 im jeweils gültigen Programmstatuswort PSW festgelegt.

Demzufolge sind im Übersetzungspuffer ALB-CAM die niederwertigsten drei Einträge 0 bis 2 den Übersetzungsmodi mit den fest zugeordneten Adreßräumen zugeordnet, so daß deren Kontrolleinträge entsprechend den zugehörigen Adreßraumnummern 0 bis 2 fest vorgegeben sind und die zugehörigen Nutzeinträge durch die Inhalte der zugehörigen Kontrollregister CR1, 7 und 13 gebildet werden, die einen integralen Bestandteil des Speicherteils für die Nutzeinträge STD bilden. Die restlichen Einträge des Übersetzungspuffers ALB-CAM können dagegen den übrigen virtuellen Adreßräumen wahlweise durch Belegung mit dem entsprechenden Zeiger ALESN/ALEN zugeordnet werden, wobei gültige Einträge durch ein gesetztes Gültigkeitsbit V=1 gekennzeichnet werden. Die Belegung der Einträge 3 bis n steuert dabei in an sich bekannter Weise die Steuerschaltung LRU, die z.B. nach dem "Least recently used"-Prinzip arbeitet.

Da der jeweilige Übersetzungsmodus von vorgegebenen Steuerbits des Programmstatuswortes PSW abhängig ist, wertet die der Überwachungsschaltung COMP2 nachgeschaltete Kodierschaltung COD nicht nur die Treffersignale der Überwachungsschaltung COMP2 aus und kodiert diese, sondern es werden bei den Übersetzungsmodi mit den fest zugeordneten Adreßräumen 0 bis 2 unabhängig von den ermittelten Treffersignalen die zugehörigen Adreßraumnummern ESA erzeugt. Demzufolge könnte auf die Gültigkeitsbits V für die Einträge 0 bis 2 verzichtet werden. Im vorliegenden Falle ermöglichen sie aber, daß die Adreßräume für den Primary Space und den Secondary Space entsprechend den Einträgen 0 und 1 auch über die Zugriffsregister ACC-REG angesprochen werden können, während der dem Home-Space entsprechende Eintrag 2 für den Zugriff über die Zugriffsregister gesperrt bleibt.

Der den Wert des steuernden Registerfeldes B überwachende Null-Detektor ZDET trägt einer weiteren Besonderheit der ESA-Architektur Rechnung. Wird nämlich das Zugriffsregister ACC-REG0 angesteuert, wird durch die Kodierschaltung COD der Adreßraum 0 für den Primary Space entsprechend Eintrag 0 gekennzeichnet.

Die Möglichkeit der Adreßübersetzung durch den Prozessor EXU wird nun von anderen Prozessoren PLU genutzt, um den dortigen Aufwand für die Adreßübersetzung gering zu halten. Diese Prozessoren weisen daher in der Regel ebenfalls einen Übersetzungspuffer TLB-CAM auf, der gleichfalls assoziativ arbeitet, wobei die Kontrolleinträge in der Regel aus der virtuellen Seitenadresse VPAD und die Nutzeinträge aus der zugehörigen, von der dynamischen Adreßumsetzung DAT gelieferten absoluten Seitenadresse APAD bestehen.

Im Rahmen der Bearbeitung eines im Befehlsregister IR1 bereitgestellten Befehls wird normalerweise das durch das Registerfeld B bezeichnete Mehrzweckregister B-REG angesteuert und anhand der darin enthaltenen Basisadresse in Verbindung mit der Distanzadresse im Registerfeld D des Befehls durch ein Addier/Subtrahierwerk ADD die virtuelle Adresse VAD des benötigten Operanden berechnet. Mit den darin enthaltenen, die virtuelle Seitenadresse VPAD bildenden Adressenbits 1 bis 19 als Vergleichsdatum wird dann in bekannter Weise der Übersetzungspuffer TLB-CAM überprüft. Stellt dabei die Überwachungsschaltung COMP1 einen Treffer HITx fest, wird über den Auswahlschalter MUX der zugehörige Nutzeintrag in Form der absoluten Seitenadresse APAD freigegeben und daraus zusammen mit den die Byteadresse innerhalb der jeweiligen Seite bildenden Bits 20 bis 31 der virtuellen Adresse VAD die absolute Adresse AAD für den Speicherzugriff gebildet.

Wird dagegen kein Treffer erzielt, wird mit dem Signal MISS1 eine Übersetzungsanforderung DATREQ an die dynamische Adreßumsetzung DAT des anderen Prozessors EXU ausgelöst und die berechnete virtuelle Adresse VAD an diesen übergeben. Die dortige Adreßübersetzungseinheit ermittelt die absolute Seitenadresse APAD und übergibt diese an den anfordernden Prozessor PLU, wo dann ein entsprechender neuer Eintrag gesteuert durch die Steuerschaltung LRU im Übersetzungspuffer TLB-CAM angelegt wird.

In Auswirkung der ESA-Architektur sind nun den Mehrzweckregistern B-REG individuelle Register ESA-REG zur Speicherung der gesonderten Adreßraumnummern ESA zugeordnet. Außerdem ist der Kontrolleintrag im Übersetzungspuffer TLB-CAM um einen Abschnitt für die jeweilige gesonderte Adreßraumnummer ESA ergänzt. Damit wird parallel zur Ansteuerung eines Basisregisters B-REG auch das zugehörige gesonderte Register ESA-REG angesteuert. Liegt ein gültiger Eintrag vor, wird dieser zusammen mit der virtuellen Seitenadresse VPAD als Vergleichsdatum der Überwachungsschaltung COMP1 zugeführt.

Folgende Steuerungsabläufe im Rahmen der Adreßübersetzung sind daher zu unterscheiden:
1. Der Eintrag im gesonderten Register ESA-REG ist entsprechend V=0 ungültig:
   In diesem Fall wird über das ODER-Glied OR unmittelbar eine Übersetzungsanforderung ESAREQ an den anderen Prozessor EXU gestellt und wenigstens das Registerfeld B des die Übersetzung auslösenden Befehls aus dem Befehlsregister IR1 an ein Register IR2 weitergeleitet. Der Prozessor EXU ermittelt in der bereits beschriebenen Weise die zuständige gesonderte Adreßraumnummer ESA und übergibt sie dem anfordernden Prozessor PLU, der sie in das zuständige gesonderte Register ESA-REG einträgt. Danach wird die Überprüfung des Übersetzungspuffers TLB-CAM eingeleitet.
2. Der Eintrag im gesonderten Register ESA-REG ist entsprechend V=1 gültig, aber die Überwachungsschaltung COMP1 ermittelt keinen Treffer:
   Dies kann darauf zurückzuführen sein, daß Teile ESA bzw. VPAD des Kontrolleintrages oder aber der gesamte Kontrolleintrag nicht zutrifft. In jedem Falle wird mit MISS1 über das ODER-Glied OR eine Anforderung ESAREQ und parallel dazu eine Anforderung DATREQ ausgelöst, so daß der Prozessor EXU über das zugehörige Zugriffsregister ACC-REG den Zeiger STD für die dynamische Adreßumsetzung DAT und diese anhand der ebenfalls übergebenen virtuellen Adresse VAD dann die absolute Seitenadresse APAD in einem Schritt ermitteln kann. Die daraufhin an den anfordernden Prozessor PLU übergebene absolute Seitenadresse APAD führt zusammen mit der gültigen gesonderten Adreßraumnummer ESA aus dem gesonderten Register ESA-REG zu einem neuen Eintrag im Übersetzungspuffer TLB-CAM.

Im Rahmen der Adreßübersetzung können also zwei Schritte unterschieden werden, nämlich ein erster, von der Anforderung ESAREQ eingeleiteter zur Ermittlung der gesonderten Adreßraumnummern ESA und ein zweiter, von der Anforderung DATREQ eingeleiteter zur Ermittlung der absoluten Seitenadresse APAD, die bei einer erstmaligen vollständigen Übersetzung einer virtuellen Adresse VAD unmittelbar nacheinander durchgeführt werden.

Liegen dagegen bereits Einträge im Übersetzungspuffer TLB-CAM vor, braucht der erste Schritt nicht zwangsläufig die Ausführung des zweiten Schrittes nach sich zu ziehen.

Wird im Übersetzungspuffer ALB-CAM des die Adreßrechnung ausführenden Prozessors EXU ein gültiger Eintrag durch einen anderen ersetzt, weil kein freier Eintrag mehr verfügbar ist, dann werden alle Einträge in den gesonderten Registern ESA-REG und dem Übersetzungspuffer TLB-CAM der Prozessoren PLU mit entsprechender Adreßraumnummer für ungültig erklärt. Analoges gilt, wenn die Inhalte der für die Adreßübersetzung benötigten Kontrollregister CR... geändert werden. In diesem Falle sind auch die entsprechenden Einträge im Übersetzungspuffer ALB-CAM für ungültig zu erklären. Der hierfür notwendige Steuerungsmechanismus ist allgemein bekannt und daher beim Ausführungsbeispiel nicht näher berücksichtigt.

Aufgrund der Erfindung ist es also möglich, die kombinierte ART-DAT-Übersetzung bei einem gültigen Eintrag im Übersetzungspuffer TLB-CAM in einem Schritt oder Maschinenzyklus durchzuführen, ohne daß im zuständigen Prozessor PLU die Zugriffsregister ACC-REG vorhanden sind. Stattdessen wird in Form der gesonderten Adreßraumnummern ESA ein stark verkürzter Zeiger von nur drei bis fünf Bits entsprechend n=8, 16 oder 32 Einträgen im Übersetzungspuffer ALB-CAM anstelle von 32 Bits verwendet, was einen wesentlich geringeren Aufwand erfordert.

## Patentansprüche

1. Verfahren zur Übersetzung von virtuellen Adressen (VAD) in absolute Adressen (AAD) in Datenverarbeitungsanlagen, deren Speichersystem entsprechend der ESA-Architektur in eine Vielzahl von gleichzeitig ansprechbaren virtuellen Adreßräumen unterteilt ist, wobei jeder dieser Adreßräume durch den Inhalt eines gesonderten Zugriffsregisters (ACC-REG) ansprechbar ist, das jeweils einem der durch das Registerfeld (B) eines Befehls ansprechbaren Mehrzweckregister (B-REG) fest zugeordnet ist und einen Zeiger (ALESN/ALEN) auf eine zuständige Adreßliste enthält, über die im Rahmen einer vorgeschalteten Register-Adreßumsetzung (ART) schließlich der für die anschließende dynamische Adreßumsetzung (DAT) benötigte Zeiger (STD) für eine Segmenttafel gefunden wird, anhand derer dann in Verbindung mit einem Teil der zu übersetzenden virtuellen Adresse (VAD) die für den Speicherzugriff benötigte absolute Adresse (AAD) gewonnen wird, für getrennte Prozessoren (PLU, EXU), die alle auf das gemeinsame Speichersystem zugreifen können,
dadurch gekennzeichnet,
- daß die Ausführung von vollständigen Adreßübersetzungen nur durch einen der Prozessoren (EXU) erfolgt,
- daß in diesem Prozessor (EXU)einer vorgegebenen Anzahl (n) von virtuellen Adreßräumen eine gesonderte Adreßraumnummer (ESA) zugeordnet wird,
- daß bei einer erstmaligen Adreßübersetzungsanforderung durch den anderen Prozessor (PLU) jeweils die zuständige gesonderte Adreßraumnummer (ESA) und die absolute Seitenadresse (APAD) ermittelt und an den anderen Prozessor (PLU) übergeben werden,
- daß die ermittelte gesonderte Adreßraumnummer (ESA) in den Mehrzweckregistern (B-REG) des anfordemden Prozessors (PLU) individuell zugeordneten gesonderten Registern (ESA-REG) sowie zusammen mit der virtuellen Seitenadresse (VPAD) als Kontrolleintrag und der ermittelten absoluten Seitenadresse (APAD) in einem assoziativ arbeitenden Übersetzungspuffer (TLB-CAM) gespeichert wird,
- daß bei jeder durch diesen anderen Prozessor (PLU) vorzunehmenden Adreßrechnung zunächst die parallel zur Ansteuerung eines der Mehrzweckregister (B-REG) aus dem zugehörigen gesonderten Register gelesene und gültige gesonderte Adreßraumnummer (ESA) zusammen mit der berechneten virtuellen Seitenadresse (VPAD) zur Überprüfung des Übersetzungspuffers (TLB-CAM) auf Vorliegen einer übersetzten Seitenadresse (APAD) herangezogen wird, und
- daß abhängig von der Überprüfung des Übersetzungspuffers (TLB-CAM) entweder die darin enthaltene gültige absolute Seitenadresse (APAD) für die Bildung der absoluten Adresse (AAD) verwendet oder aber bei negativem Prüfergebnis die Übersetzung durch den dafür zuständigen Prozessor (EXU) angefordert wird.

2. Verfahren nach Anspruch 1,
**dadurch gekennzeichnet,**
daß bei Vorliegen einer im gesonderten Register (ESA-REG) für ungültig erklärten (V=0) gesonderten Adreßraumnummer (ESA) die Übersetzungsanforderung (ESAREQ) an den dafür zuständigen Prozessor (EXU) unmittelbar ohne Überprüfung des Übersetzungspuffers (TLB-CAM) ausgelöst wird.

3. Verfahren nach Anspruch 1 oder 2,
**dadurch gekennzeichnet,**
daß eine erstmalige vollständige Adreßübersetzung in zwei Schritten erfolgt, wobei bei im jeweils ersten Schritt (ESAREQ) die gesonderte Adreßraumnummer (ESA) anhand des an den ausführenden Prozessor (EXU) weitergeleiteten Registerfeldes (B) ermittelt und in dem dem zuständigen Mehrzweckregister (B-REG) zugeordneten gesonderten Register (ESA-REG) des anfordernden Prozessors (PLU) abgespeichert wird, während im zweiten Schritt (DATREQ) die absolute Seitenadresse (APAD) anhand der an den ausführenden Prozessor (EXU) zusammen mit dem Registerfeld (B) weitergeleiteten virtuellen Adresse (VAD) ermittelt und der gesamte Eintrag im Übersetzungspuffer (TLB-CAM) des anfordernden Prozessors (PLU) mit der gesonderten Adreßraumnummer (ESA) aus dem zugehörigen gesonderten Register (ESA-REG) neu angelegt wird.

4. Verfahren nach Anspruch 2 und 3,
**dadurch gekennzeichnet,**
daß bei einer erfolglos durchgeführten Überprüfung des Übersetzungspuffers (TLB-CAM) lediglich der zweite Schritt (DATREQ) der Adreßübersetzung zur Ermittlung der absoluten Seitenadresse (APAD) ausgeführt wird.

5. Verfahren nach einem der Ansprüche 1 bis 4,
**dadurch gekennzeichnet,**
daß im die Adreßübersetzung durchführenden Prozessor (EXU) ebenfalls ein assoziativ arbeitender Übersetzungspuffer (ALB-CAM) verwendet wird, in dem die in den Zugriffsregistern (ACC-REG) enthaltenen Zeiger (ALESN/ALEN) als Kontrolleinträge für den jeweils ermittelten zugehörigen Zeiger (STD) zur Ansteuerung der dynamischen Adreßumsetzung (DAT) eingetragen werden, wobei jedem der Einträge eine der gesonderten Adreßraumnummern (ESA) entspricht.

6. Verfahren nach Anspruch 5,
**dadurch gekennzeichnet,**
daß die jeweils zuständige gesonderte Adreßraumnummer (ESA) vom jeweils eine Trefferanzeige bewirkenden Eintrag abgeleitet wird.

7. Verfahren nach Anspruch 5 und 6,
**dadurch gekennzeichnet,**
daß die Auswahl des zugehörigen Zeigers (STD) für die dynamische Adreßumsetzung (DAT) abhängig von der bei der Überprüfung des Umsetzungspuffers (ALB-CAM) ermittelten gesonderten Adreßraumnummer (ESA) erfolgt.

8. Verfahren nach einem der Ansprüche 5 bis 7,
**dadurch gekennzeichnet,**
daß entsprechend der ESA-Architektur in den durch das jeweilige Programmstatuswort (PSW) vorgegebenen vier verschiedenen Übersetzungsmodi gearbeitet wird, wobei der Adreßraum "0" den Primary Space, der Adreßraum "1" den Secondary Space und der Adreßraum "2" den Home Space bildet und die zugehörigen Zeiger (STD) dieser drei Adreßräume für die dynamische Adreßumsetzung (DAT) durch die Inhalte der Kontrollregister (CR1, 7, 13) vorgegeben werden, während die restlichen Adreßräume durch die Inhalte der Zugriffsregister (ACC-REG) definiert und die zugehörigen Zeiger (STD) für die dynamische Adreßumsetzung durch die zuständige Adreßliste der Register-Adreßumsetzung (ART) vorgegeben werden.

9. Verfahren nach Anspruch 8,
**dadurch gekennzeichnet,**
daß die Kontrollregister (CR1, 7 und 13) einen integralen Bestandteil der Übersetzungspuffer (ALB-CAM) bilden und den den Adreßräumen "0" bis "2" entsprechenden Einträgen "0" bis "2" zugeordnet werden, während die übrigen Einträge "3" bis "n" wahlweise den durch die Zugriffsregister (ACC-REG) definierten virtuellen Adreßräumen zuordenbar sind, wobei die Einträge "0" und "1" als gültig und der Eintrag "2" für die Home Space als ungültig gekennzeichnet werden, und
daß bei einem den ersten drei Adreßräumen "0" bis "2" entsprechenden Übersetzungsmodus abhängig von den entsprechenden Steuerbits im Programmstatuswort (PSW5, 16, 17) ein im Rahmen der Überprüfung des Übersetzungspuffers (ALB-CAM) geliefertes Treffersignal in die den zugehörigen virtuellen Adreßraum kennzeichnende gesonderte Adreßraumnummer (ESA) abgewandelt wird.

10. Schaltungsanordnung zur Übersetzung von virtuellen Adressen (VAD) in absolute Adressen (AAD) in Datenverarbeitungsanlagen, deren Speichersystem entsprechend der ESA-Architektur in eine Vielzahl von gleichzeitig ansprechbaren virtuellen Adreßräumen unterteilt ist, wobei jeder dieser Adreßräume durch den Inhalt eines gesonderten Zugriffsregisters (ACC-REG) ansprechbar ist, das jeweils einem der durch das Registerfeld (B) eines Befehls ansprechbaren Mehrzweckregister (B-REG) fest zugeordnet ist und einen Zeiger (ALESN/ALEN) auf eine zuständige Adreßliste enthält, über die im Rahmen einer vorgeschalteten Register-Adreßumsetzung (ART) schließlich der für die anschließende dynamische Adreßumsetzung (DAT) benötigte Zeiger (STD) für eine Segmenttafel gefunden wird, anhand derer dann in Verbindung mit einem Teil der zu übersetzenden virtuellen Adresse (VAD) die für den Speicherzugriff benötigte absolute Adresse (AAD) gewonnen wird, für getrennte Prozessoren (PLU, EXU), die alle auf das gemeinsame Speichersystem zugreifen können,
**dadurch gekennzeichnet,**
daß die Ausführung von vollständigen Adreßübersetzungen nur durch einen der Prozessoren (EXU) erfolgt,
daß dieser einen Prozessor (EXU) einer vorgegebenen Anzahl (n) von virtuellen Adreßräumen eine gesonderte Adreßraumnummer (ESA) zuordnet, und bei einer erstmaligen Adreßübersetzungsanforderung durch einen anderen Prozessor (PLU) jeweils die zuständige gesonderte Adreßraumnummer (ESA) und die absolute Seitenadresse (APAD) ermittelt,
- daß mit der Register-Adreßumsetzung (ART) in diesem einen Prozessor (EXU) ein gesonderter Speicher für die Zwischenspeicherung der durch die Zugriffsregister (ACC-REG) vorgegebenen Zeiger (ALESN/ALEN) für die einzelnen virtuellen Adreßräume in Zuordnung zu den vorgegebenen gesonderten Adreßraumnummern (ESA) gekoppelt ist,
- daß in den anderen Prozessoren (PLU) jedem der Mehrzweckregister (B-REG) ein gesondertes individuelles Register (ESA-REG) für die Speicherung der jeweils ermittelten gesonderten Adreßraumnummer (ESA) zugeordnet ist, und
- daß die Einträge in einem assoziativ arbeitenden Übersetzungspuffer (TLB-CAM) dieses anderen Prozessors neben dem Abschnitt für die als Kontrolleintrag dienende virtuelle Seitenadresse (VPAD) und für die ermittelte absolute Seitenadresse (APAD) jeweils einen weiteren Abschnitt für zugehörige gesonderte ermittelte Adreßraumnummer (ESA) als weiteren Kontrolleintrag aufweisen.

11. Schaltungsanordnung nach Anspruch 10,
**dadurch gekennzeichnet,**
daß der mit der Register-Adreßumsetzung (ART) gekoppelte Speicher als assoziativ arbeitender Umsetzungspuffer (ALB-CAM) für die Zwischenspeicherung der jeweils zu den durch die Zugriffsregister (ACC-REG) vorgegebenen Adreßräumen ermittelten Zeiger (STD) für die dynamische Adreßumsetzung (DAT) ausgebildet ist, dessen Einträge jeweils einer der gesonderten Adreßraumnummern (ESA) zugeordnet sind.

12. Schaltungsanordnung nach Anspruch 10 oder 11,
**dadurch gekennzeichnet,**
daß mit den gesonderten Registem (ESA-REG) eine Überwachungsschaltung (OR) zur Überwachung der Einträge auf ihre Gültigkeit und zur Auslösung einer Übersetzungsanforderung (ESAREQ) an den die Adreßübersetzung ausführenden Prozessor (EXU) bei ungültigem Eintrag gekoppelt ist.

13. Schaltungsanordnung nach Anspruch 11 oder 12,
**dadurch gekennzeichnet,**
- daß den drei Adreßräumen ("0" bis "2") für den Primary Space, den Secondary Space und den Home-Space die entsprechenden drei niederwertigsten Einträge im assoziativ arbeitenden Umsetzungspuffer (ALB-CAM) fest zugeordnet sind, wobei die zugehörigen Kontrollregister (CR1,7, 13) einen integralen Bestandteil dieser Einträge bilden, und
- daß mit der Überwachungsschaltung (COMP2) dieses Umsetzungspuffers (ALB-CAM) eine gesonderte Steuereinrichtung (COD) gekoppelt ist, die das im Rahmen einer Überprüfung des Umsetzungspuffers (ALB-CAM) von einem der Einträge gelieferte Treffersignal in die zugehörige gesonderte Adreßraumnummer (ESA) umwandelt, wobei abhängig von den den gültigen Übersetzungsmodus anzeigenden Steuerbits (5, 16, 17) im jeweiligen Programmstatuswort (PSW) bei Vorliegen eines der drei gesonderten Übersetzungsmodi das jeweilige Treffersignal in die den zugehörigen virtuellen Adreßraum kennzeichnende gesonderte Adreßraumnummer (ESA) abgewandelt wird.

## Claims

1. Method for translating virtual addresses (VAD) into absolute addresses (AAD) in data processing systems, the storage system of which is subdivided into a multiplicity of simultaneously addressable virtual address spaces in accordance with the ESA architecture, each of these address spaces being addressable by the content of a separate access register (ACC-REG) which in each case is permanently allocated to one of the multipurpose registers (B-REG), which can be addressed by the register field (B) of a command, and contains a pointer (ALESN/ALEN) to a relevant address list via which, during a preceding register/address conversion (ART), the pointer (STD), needed for the subsequent dynamic address conversion (DAT), for a segment table is finally found, by means of which the absolute address (AAD), needed for the storage access, is obtained in connection with a part of the virtual address (VAD) to be translated, for separate processors (PLU, EXU), all of which can access the common storage system, characterized in that
- complete address translations are only executed by one of the processors (EXU),
- in this processor (EXU), a separate address space number (ESA) is allocated to a predetermined number (n) of virtual address spaces,
- in the case of a first address translation request by the other processor (PLU), in each case the relevant separate address space number (ESA) and the absolute page address (APAD) are determined and transferred to the other processor (PLU),
- the separate address space number (ESA) determined is stored in separate registers (ESA-REG) individually allocated to the multipurpose registers (B-REG) of the requesting processor (PLU) and, together with the virtual page address (VPAD) as control entry and the absolute page address (APAD) determined in a translation buffer (TLB-CAM) operating in an associated manner,
- with each address calculation to be carried out by this other processor (PLU), first the valid separate address space number (ASA) read out of the associated separate register in parallel with the selection of one of the multipurpose registers (B-REG), together with the calculated virtual page address (VPAD), is used for checking the translation buffer (TLB-CAM) for the presence of a translated page address (APAD), and that
- in dependence on the check of the translation buffer (TLB-CAM), either the valid absolute page address (APAD) contained therein is used for forming the absolute address (AAD) or, in the case of a negative test result, the translation is requested by the relevant processor (EXU).

2. Method according to Claim 1, characterized in that in the case of the presence of a separate address space number (ESA) declared invalid (V=0) in the separate register (ESA-REG), the translation request (ESAREQ) to the relevant processor (EXU) is triggered directly without checking the translation buffer (TLB-CAM).

3. Method according to Claim 1 or 2, characterized in that a first complete address translation takes place in two steps, wherein in the first step (ESAREQ) in each case, the separate address space number (ESA) is determined by means of the register field (B) forwarded to the executing processor (EXU) and is stored in the separate register (ESA-REG) of the requesting processor (PLU), allocated to the relevant multipurpose register (B-REG), whilst in the second step (DATREQ), the absolute page address (APAD) is determined by means of the virtual address (VAD) forwarded to the executing processor (EXU) together with the register field (B), and the total entry is newly set up in the translation buffer (TLB-CAM) of the requesting processor (PLU) together with the separate address space number (ESA) from the associated separate register (ESA-REG).

4. Method according to Claim 2 and 3, characterized in that in the case of an unsuccessful check of the translation buffer (TLB-CAM), only the second step (DATREQ) of the address translation is carried out for determining the absolute page address (APAD).

5. Method according to one of Claims 1 to 4, characterized in that in the processor (EXU) performing the address translation, a translation buffer (ALB-CAM) operating in an associative manner is also used in which the pointers (ALESN/ALEN) contained in the access registers (ACC-REG) are entered as control entries for the associated pointer (STD) determined in each case for selecting the dynamic address conversion (DAT), each of the entries corresponding to one of the separate address space numbers (ESA).

6. Method according to Claim 5, characterized in that the separate address space number (ESA) relevant in each case is derived from an entry in each case resulting in a hit indication.

7. Method according to Claim 5 and 6, characterized in that the selection of the associated pointer (STD) for the dynamic address conversion (DAT) occurs in dependence on the separate address space number (ESA) determined during the check of the conversion buffer (ALB-CAM).

8. Method according to one of Claims 5 to 7, characterized in that, in accordance with the ESA architecture, operation takes place in the four different translation modes predetermined by the respective program status word (PSW), the address space "0" forming the primary space, address space "1" forming the secondary space and address space "2" forming the home space and the associated pointers (STD) of these three address spaces are predetermined for the dynamic address conversion (DAT) by the contents of the control registers (CR1, 7, 13) whilst the remaining address spaces are defined by the contents of the access registers (ACC-REG) and the associated pointers (STD) for the dynamic address conversion are predetermined by the relevant address list of the register address conversion (ART).

9. Method according to Claim 8, characterized in that the control registers (CR1, 7 and 13) form an integral component of the translation buffers (ALB-CAM) and are allocated to the entries "0" to "2" corresponding to the address spaces "0" to "2" whilst the remaining entries "3" to "n" can be optionally allocated to the virtual address spaces defined by the access registers (ACC-REG), entries "0" and "1" being characterized as valid and entry "2" being characterized as invalid for the home space, and
that in a translation mode corresponding to the first three address spaces "0" to "2", a hit signal supplied during the checking of the translation buffer (ALB-CAM) is converted into the separate address space number (ESA) characterizing the associated virtual address space in dependence on the corresponding control bits in the program status word (PSW5, 16, 17).

10. Circuit arrangement for translating virtual addresses (VAD) into absolute addresses (AAD) in data processing systems, the storage system of which is subdivided into a multiplicity of simultaneously addressable virtual address spaces in accordance with the ESA architecture, each of these address spaces being addressable by the content of a separate access register (ACC-REG) which in each case is permanently allocated to one of the multipurpose registers (B-REG), which can be addressed by the register field (B) of a command, and contains a pointer (ALESN/ALEN) to a relevant address list via which, during a preceding register/address conversion (ART), the pointer (STD), needed for the subsequent dynamic address conversion (DAT), for a segment table is finally found, by means of which the absolute address (AAD), needed for the storage access, is then obtained in connection with a part of the virtual address (VAD) to be translated, for separate processors (PLU, EXU), all of which can access the common storage system, characterized in that
complete address translations are only executed by one of the processors (EXU),
that this one processor (EXU) allocates a separate address space number (ESA) to a predetermined number (n) of virtual address spaces, and during a first address translation request by another processor (PLU), in each case determines the relevant separate address space number (ESA) and the absolute page address (APAD),
- that with the register address conversion (ART) in this one processor (EXU), a separate memory for temporary storage of the pointers (ALESN/ALEN) predetermined by the access registers (ACC-REG) for the individual virtual address spaces is coupled in correlation with the predetermined separate address space numbers (ESA),
- that in the other processors (PLU), a separate individual register (ESA-REG) for the storage of the separate address space number (ESA) determined in each case is allocated to each of the multipurpose registers (B-REG), and
- that the entries in a translation buffer (TLB-CAM) operating in an associative manner, of this other processor exhibit, in addition to the section for the virtual page address (VPAD) used as control entry and for the absolute page address (APAD) determined, in each case a further section for the associated separate address space number (ESA) determined as further control entry.

11. Circuit arrangement according to Claim 10, characterized in that the memory coupled to the register address conversion (ART) is constructed as conversion buffer (ALB-CAM) operating in an associative manner for the temporary storage of the pointers (STD), in each case determined for the address spaces predetermined by the access registers (ACC-REG), for the dynamic address conversion (DAT), the entries of which are in each case allocated to one of the separate address space numbers (ESA).

12. Circuit arrangement according to Claim 10 or 11, characterized in that a monitoring circuit (OR) for monitoring the entries for their validity and for triggering a translation request (ESAREQ) to the processor (EXU) executing the address translation in the case of an invalid entry is coupled to the separate registers (ESA-REG).

13. Circuit arrangement according to Claim 11 or 12, characterized in that
- the three address spaces ("0" to "2") for the Primary Space, the Secondary Space and the Home Space are permanently allocated the corresponding least significant entries in the conversion buffer operating in an associative manner (ALB-CAM), the associated control registers forming an integral component of these entries, and
- in that the monitoring circuit (COMP2) of this conversion buffer (ALB-CAM) is coupled to a separate control device (COD) which converts the hit signal, supplied by one of the entries during a check of the conversion buffer (ALB-CAM), into the associated separate address space number (ESA), during which process the respective hit signal is modified into the separate address space number (ESA) identifying the associated virtual address space, in dependence on the control bits (5, 16, 17), indicating the valid translation mode, in the respective program status word (PSW) if one of the three separate translation modes are present.

## Revendications

1. Procédé pour la traduction d'adresses virtuelles (VAD) en adresses absolues (AAD) dans un système de traitement de données dont le système de mémoire structuré selon l'architecture ESA est divisé en une multitude d'espaces d'adresse virtuelle adressables simultanément, chacun de ces espaces d'adresse étant adressable par le contenu d'un registre d'accès séparé (ACC-REG) qui est attribué en permanence à l'un des registres généraux (B-REG) adressables par le champ de registre (B) d'une instruction et qui comporte un pointeur (ALESN/ALEN) sur une liste d'adresses compétente, par l'intermédiaire de laquelle, dans le cadre d'une translation d'adresse de registre (ART) en amont, on trouve finalement le pointeur (STD) nécessaire à la translation dynamique d'adresse (DAT) qui suit pour une table de segments, grâce à laquelle en combinaison avec une partie de l'adresse virtuelle (VAD) à traduire, on obtient ensuite l'adresse absolue (AAD) nécessaire pour accéder à la mémoire, pour des processeurs séparés (PLU, EXU) susceptibles d'accéder tous au système de mémoire commun, caractérisé en ce que
- l'exécution de traductions complètes d'adresse est assurée par seulement l'un des processeurs (EXU),
- dans ce processeur (EXU), un numéro séparé d'espace d'adresse (ESA) est attribué à un nombre prédéfini (n) d'espaces d'adresse virtuelle,
- lors d'une première demande de traduction d'adresse par l'autre processeur (PLU), le numéro séparé d'espace d'adresse (ESA) compétent et l'adresse absolue de page (APAD) sont déterminés et transmis à l'autre processeur (PLU),
- le numéro séparé d'espace d'adresse (ESA) déterminé est stocké dans les registres séparés (ESA-REG) attribués individuellement aux registres généraux (B-REG) du processeur demandeur (PLU) et, ensemble avec l'adresse virtuelle de page (VPAD) servant d'entrée de contrôle et l'adresse absolue de page (APAD) déterminée, dans une mémoire tampon de traduction (TLB-CAM) à fonctionnement associatif,
- pour chaque calcul d'adresse à effectuer par cet autre processeur (PLU), il est d'abord fait appel au numéro séparé d'espace d'adresse (ESA) valide et extrait en parallèle du registre séparé associé pour commander l'un des registres généraux (B-REG), et à l'adresse virtuelle de page (VPAD) calculée, pour contrôler la mémoire tampon de traduction (TLB-CAM) quant à la présence d'une adresse traduite de page (APAD), et
- en fonction du contrôle de la mémoire tampon de traduction (TLB-CAM), soit l'adresse absolue de page (APAD) valide contenue dans celle-ci est utilisée pour constituer l'adresse absolue (AAD) soit lorsque le résultat du contrôle est négatif, la traduction par le processeur (EXU) compétent est demandée.

2. Procédé selon la revendication 1, caractérisé en ce qu'en présence d'un numéro séparé d'espace d'adresse (ESA) déclaré invalide (V=O) dans le registre séparé (ESA-REG), la demande de traduction (ESAREQ) adressée au processeur (EXU) compétent est déclenchée aussitôt, sans contrôle de la mémoire tampon de traduction (TLB-CAM).

3. Procédé selon la revendication 1 ou 2, caractérisé en ce qu'une première traduction complète d'adresse se fait en deux étapes, dans chaque première étape (ESAREQ), le numéro séparé d'espace d'adresse (ESA) est calculé à l'aide du champ de registre (B) transmis au processeur exécutant (EXU) et stocké dans le registre séparé (ESA-REG) attribué au registre général (B-REG) compétent du processeur demandeur (PLU), tandis que dans la deuxième étape (DATREQ), l'adresse absolue de page (APAD) est déterminée à l'aide de l'adresse virtuelle (VAD) transmise au processeur exécutant (EXU) ensemble avec le champ de registre (B), et l'ensemble de l'entrée dans la mémoire tampon de traduction (TLB-CAM) du processeur demandeur (PLU) est recréé avec le numéro séparé d'espace d'adresse (ESA) provenant du registre séparé (ESA-REG) associé.

4. Procédé selon les revendications 2 et 3, caractérisé en ce que dans le cas d'un contrôle négatif de la mémoire tampon de traduction (TLB-CAM), seule la deuxième étape (DATREQ) de la traduction d'adresse est effectuée pour déterminer l'adresse absolue de page (APAD).

5. Procédé selon l'une des revendications 1 à 4, caractérisé en ce que dans le processeur (EXU) exécutant la traduction d'adresse est utilisé également une mémoire tampon de traduction (ALB-CAM) à fonctionnement associatif, dans laquelle sont inscrits les pointeurs (ALESN/ALEN) contenus dans les registres d'accès (ACC-REG) comme entrées de contrôle pour chaque pointeur (STD) associé déterminé, pour commander la translation dynamique d'adresse (DAT), à chacune des entrées correspondant l'un des numéros séparés d'espace d'adresse (ESA).

6. Procédé selon la revendication 5, caractérisé en ce que le numéro séparé d'espace d'adresse (ESA) compétent est dérivé de l'entrée induisant un affichage de correspondance.

7. Procédé selon les revendications 5 et 6, caractérisé en ce que la sélection du pointeur (STD) associé pour la translation dynamique d'adresse (DAT) se fait en fonction du numéro séparé d'espace d'adresse (ESA) déterminé lors du contrôle de la mémoire tampon de translation (ALB-CAM).

8. Procédé selon l'une des revendications 5 à 7, caractérisé en ce que l'on utilise, conformément à l'architecture ESA, les quatre modes de traduction différents prédéfinis par le mot d'état programme (PSW) respectif, l'espace d'adresse "0" constituant le Primary Space, l'espace d'adresse "1" le Secondary Space et l'espace d'adresse "2" le Home Space, et les pointeurs (STD) associés de ces trois espaces d'adresse pour la translation dynamique d'adresse (DAT) étant prédéfinis par les contenus des registres de contrôle (CR1, 7, 13), tandis que les autres espaces d'adresse sont définis par les contenus des registres d'accès (ACC-REG) et les pointeurs (STD) associés pour la translation dynamique d'adresse sont prédéfinis par la liste d'adresses compétente de la translation d'adresse de registre (ART).

9. Procédé selon la revendication 8, caractérisé en ce que
- les registres de contrôle (CR1, 7 et 13) constituent un élément intégral de la mémoire tampon de traduction (ALB-CAM) et sont attribués aux entrées "0" à "2" correspondant aux espaces d'adresse "0" à "2", tandis que les autres entrées "3" à "n" peuvent être attribuées au choix aux espaces d'adresse virtuelle définis par les registres d'accès (ACC-REG), les entrées "0" et "1" étant identifiées comme valides et l'entrée "2" pour le Home Space comme invalide, et
- pour un mode de traduction correspondant aux trois premiers espaces d'adresse "0" à "2", en fonction des bits de commande correspondants dans le mot d'état programme (PSW5, 16, 17), un signal de correspondance fourni dans le cadre du contrôle de la mémoire tampon de traduction (ALB-CAM) est converti en numéro séparé d'espace d'adresse (ESA) identifiant l'espace d'adresse virtuelle associé.

10. Circuit pour la traduction d'adresses virtuelles (VAD) en adresses absolues (AAD) dans un système de traitement de données dont le système de mémoire structuré selon l'architecture ESA est divisé en une multitude d'espaces d'adresse virtuelle adressables simultanément, chacun de ces espaces d'adresse étant adressable par le contenu d'un registre d'accès séparé (ACC-REG) qui est attribué en permanence à l'un des registres généraux (B-REG) adressables par le champ de registre (B) d'une instruction et qui comporte un pointeur (ALESN/ALEN) sur une liste d'adresses compétente, par l'intermédiaire de laquelle, dans le cadre d'une translation d'adresse de registre (ART) en amont, on trouve finalement le pointeur (STD) nécessaire à la translation dynamique d'adresse (DAT) qui suit pour une table de segments, grâce à laquelle en combinaison avec une partie de l'adresse virtuelle (VAD) à traduire, on obtient ensuite l'adresse absolue (AAD) nécessaire pour accéder à la mémoire, pour des processeurs séparés (PLU, EXU) susceptibles d'accéder tous au système de mémoire commun, caractérisé en ce que
- l'exécution de traductions complètes d'adresse est assurée par seulement l'un des processeurs (EXU),
- ce processeur (EXU) attribue à un nombre prédéfini (n) d'espaces d'adresse virtuelle un numéro séparé d'espace d'adresse (ESA) et détermine lors d'une première demande de traduction d'adresse par un autre processeur (PLU) le numéro séparé d'espace d'adresse (ESA) compétent et l'adresse absolue de page (APAD),
- avec la translation d'adresse de registre (ART) dans ce processeur (EXU) est connectée une mémoire séparée pour le stockage intermédiaire des pointeurs (ALESN/ALEN) prédéfinis par les registres d'accès (ACC-REG) pour les différents espaces d'adresse virtuelle attribués aux numéros séparés d'espace d'adresse (ESA) prédéfinis,
- dans les autres processeurs (PLU), un registre individuel séparé (ESA-REG) pour le stockage du numéro séparé d'espace d'adresse (ESA) déterminé est attribué à chacun des registres généraux (B-REG), et
- les entrées dans une mémoire tampon de traduction (TLB-CAM) à fonctionnement associatif de cet autre processeur comportent chacun, outre le segment pour l'adresse virtuelle de page (VPAD) servant d'entrée de contrôle et pour l'adresse absolue de page (APAD) déterminée, un autre segment pour le numéro séparé d'espace d'adresse (ESA) associé et déterminé servant d'entrée de contrôle complémentaire.

11. Circuit selcn la revendication 10, caractérisé en ce que la mémoire connectée avec la translation d'adresse de registre (ART) est réalisée sous forme de mémoire tampon de translation (ALB-CAM) à fonctionnement associatif destinée au stockage intermédiaire des pointeurs (STD) pour la translation dynamique d'adresse (DAT), déterminés chacun pour les espaces d'adresse prédéfinis par les registres d'accès (ACC-REG), dont les entrées sont attribuées à chaque fois à l'un des numéros séparés d'espace d'adresse (ESA).

12. Circuit selon la revendication 10 ou 11, caractérisé en ce qu'un circuit de supervision (OR) est connecté avec les registres séparés (ESA-REG), qui est destiné à superviser la validité des entrées et à déclencher une demande de traduction (ESAREQ) adressée au processeur (EXU) exécutant la traduction d'adresse en cas d'entrée invalide.

13. Circuit selon la revendication 11 ou 12, caractérisé en ce que
- aux trois espaces d'adresse ("0" à "2") pour le Primary Space, le Secondary Space et le Home Space sont attribuées en permanence les trois entrées correspondantes de plus faible poids dans la mémoire tampon de translation (ALB-CAM) à fonctionnement associatif, les registres de contrôle (CR1, 7, 13) associés formant un élément intégral de ces entrées, et
- avec le circuit de supervision (COMP2) de cette mémoire tampon de translation (ALB-CAM) est connecté un dispositif de commande (COD) séparé, lequel convertit le signal de correspondance fourni par l'une des entrées dans le cadre d'une supervision de la mémoire tampon de translation (ALB-CAM) en numéro séparé d'espace d'adresse (ESA) associé, en fonction des bits de commande (5, 16, 17) affichant le mode de traduction valide dans le mot d'état programme (PSW) et en présence de l'un des trois modes de traduction séparés, le signal de correspondance respectif étant converti en numéro séparé d'espace d'adresse (ESA) identifiant l'espace d'adresse virtuelle associé.
